Europäisches Patentamt

European Patent Office

Office européen des brevets

(11) Publication number: **0 056 670**
**B1**

(12) **EUROPEAN PATENT SPECIFICATION**

(45) Date of publication of patent specification: **27.08.86**

(21) Application number: **82200038.6**

(22) Date of filing: **14.01.82**

(51) Int. Cl.⁴: **F 28 D 21/00, F 23 J 15/00, F 23 L 17/00**

(54) Assembly comprising a heat recovery device.

(30) Priority: **16.01.81 NL 8100182**

(43) Date of publication of application:
**28.07.82 Bulletin 82/30**

(45) Publication of the grant of the patent:
**27.08.86 Bulletin 86/35**

(84) Designated Contracting States:
**AT BE CH DE FR GB IT LI LU NL SE**

(56) References cited:
**DE-A-2 656 544**
**DE-A-2 817 450**
**GB-A-2 025 599**
**US-A-2 690 720**
**US-A-3 813 039**
**US-A-4 147 303**
**US-A-4 185 685**
**US-A-4 194 488**
**US-A-4 217 877**

(73) Proprietor: **Nederlandse Energie Ontwikkeling Maatschappij (NEOM) B.V.**
**Broeksittarderweg 41**
**NL-6137 BH Sittard (NL)**

(72) Inventor: **Janssen, Norbert Gerardus L.M.**
**Europastraat 46**
**NL-6235 BW Ulestraten (NL)**

(74) Representative: **Roeffen, Wilhelmus Johannes Maria et al**
**OCTROOIBUREAU DSM Postbus 9**
**NL-6160 MA Geleen (NL)**

Courier Press, Leamington Spa, England.

EP 0 056 670 B1

## Description

The invention relates to an assembly comprising a heat recovery device which is incorporated in the combustion gas discharge duct of a gas- or oilfired heating apparatus with a liquid or air circuit, said heat recovery device substantially comprising supply and discharge connections for the combustion gases to be passed through a heat exchanger for exchanging heat between the combustion gases and the liquid or air in said liquid or air circuit, and a fan for forcing the combustion gases past the heat exchanger, the supply and discharge connections for the combustion gases and the fan being so arranged and designed that if the fan is not operating, or operating inadequately the combustion gases are led — at least in part — directly to the combustion gas discharge duct.

'Heat recovery device' is understood to mean a device that can be used to complete a heating apparatus with a liquid or an air circuit by transferring more energy from the combustion gases to the liquid or the air to be heated. This economizer can be taken up separately in the combustion gas discharge line, but it can also be integrated with the heating apparatus.

Such an assembly is known from US—A—4,185,685. This known assembly comprises a heating apparatus, a heat exchanger, a pair of conduits connected to the exhaust stack and a blower. At least part of the exhaust gases is sucked through the heat exchanger and blown back by the blower.

Though the blower has a capacity sufficient to force the total amount of combustion gases through the heat exchanger at full capacity of the heating apparatus it is very well possible that part of the combustion gases flow direct to the stack since no provisions are made to guide the combustion gases through the heat exchanger.

US—A—4,217,877 relates to a furnace in which air to be heated is aspirated past a heating element. In this reference a fan forces fresh air into a heating system and mixes the fresh air with recirculated air, baffles preventing the fresh air from flowing back into the heat exchanger section.

The aim of the invention is to ensure that a maximum proportion of the combustion gases is forced past the heat exchanger when the fan is operating properly and the combustion gases are discharged to the combustion gas discharge duct under all circumstances even when the fan is not operating adequately, as well as to prevent back flow of the gases from the heat exchanger discharge to the heat exchanger inlet connection.

In accordance with the invention, an inclined guide baffle is fixed at the exit end of the discharge connection, which baffle is extends from said exit end into combustion gas discharge duct at an angle between 40° and 70° relative to the central axis of the combustion gas discharge duct, the dimension of said baffle measured in the direction parallel to the central axis of the combustion gas discharge duct being smaller than the corresponding dimension of the exit end of the discharge connection.

By using a guide baffle of such dimensions that part of the combustion gases to be led into the combustion gas discharge duct after heat exchange is led in a direction normal to the central axis of the combustion gas discharge duct, the inflowing combustion gases are in part forced to the wall of the combustion gas discharge duct opposite the inflow opening, so that an effective combustion gas shield is formed.

Because the supply of combustion gases after the heat exchanger into the combustion gas discharge duct takes place at an angle, so that the combustion gases are led obliquely upwards into the combustion gas discharge duct in the direction of discharge of the combustion gases out of the combustion gas discharge duct, a sealing combustion gas shield is established at the place of supply into the combustion gas discharge duct when the fan is in operation. Thus it is achieved that the combustion gases that are not in the first instance drawn into the combustion gas supply opening of the heat exchanger by the fan are stopped, to be subsequently forced through the heat exchanger yet.

When the fan is not operating, or operating inadequately, the combustion gases can be discharged directly via the combustion gas discharge duct, the passage through the combustion gas discharge duct being not, or only partially, closed by the heat exchanger. Admittedly no preheating of the water or the air is obtained, but on the other hand there is the substantial advantage that no combustion gases flow into the room where the heating apparatus is installed, or, respectively, that the boiler is put out of operation.

The angle of discharge, relative to the central axis of the combustion gas discharge duct, at which the combustion gases are led into the combustion gas discharge duct after heat exchange is preferably between 50° and 60°.

The guide baffle may extend partly into the combustion gas discharge duct, over a distance equal to, for instance, 0.25—0.50 times the inner diameter of the combustion discharge duct, measured normal to the central axis of the duct.

In one of the versions of the invention, the heat exchanger extends at most partly into the combustion gas discharge duct. In order to have a normal discharge of the combustion gases via the combustion gas discharge duct also when the fan is not operating, or operating inadequately, the heat exchanger does not extend further into the combustion gas discharge duct than at most over a distance equal to half the inner diameter of this duct.

One version of the assembly according to the invention will be elucidated with reference to the drawing relating to a heating apparatus with a liquid circuit;

In this drawing:

Fig. 1 is a longitudinal section, and

Fig. 2 a section along the line a—a in Fig. 1.

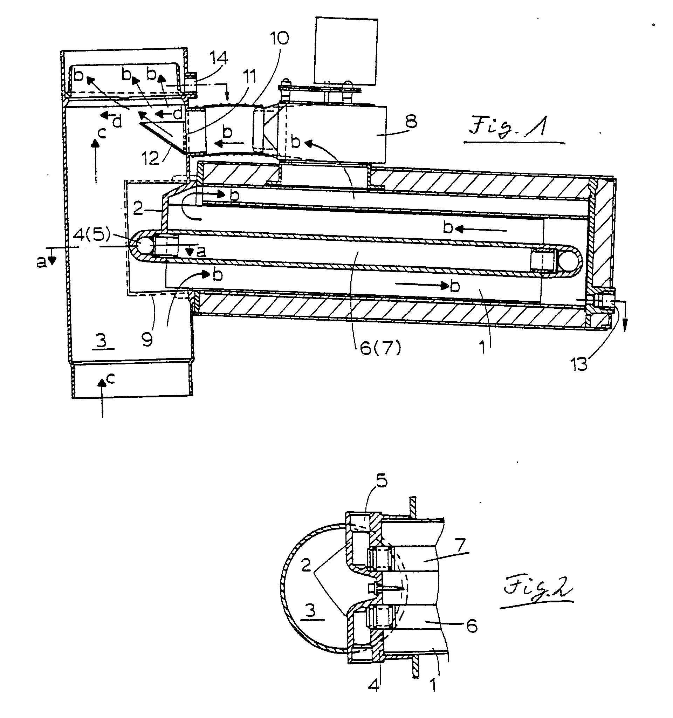

As shown in Figs. 1 and 2, the heat exchanger 1 connects to the combustion gas discharge duct 3 with side 2. The supply and discharge for the circulating water are indicated by 4 and 5, respectively. Side 2 of the heat exchanger 1 does not extend, or extends only partly, into the duct 3, so that a large part of this duct 3 remains unobstructed. The ducts in the heat exchanger through which the water flows from supply 4 to discharge 5 are indicated by 6 and 7.

Combustion gases are drawn from the combustion gas discharge duct into the heat exchanger 1 by the fan 8 via the inflow opening 9. These gases flow through the heat exchanger 1 to the fan 8, as indicated by arrows b. From the fan the gases are led into the combustion gas discharge duct 3 via connection 10, passage 11 and a guide baffle 12.

The performance curve of the fan is as much as possible steep and in terms of maximum pressure and gas displacement volume it is adapted to the capacity of the heating apparatus.

A steep performance curve is desirable to avoid that the operation of the heating apparatus becomes dependent to an impermissible extent on incidental circumstances, such as downdrafts or obstructions in the combustion gas discharge duct, for instance due to fouling.

As shown in Fig. 1, the guide baffle 12 is placed at an angle, so that the combustion gases are led obliquely upwards into the combustion gas discharge duct 3, in the direction of discharge through the duct 3. Due to the inclined position of the guide baffle 12, the combustion gases are led into the combustion gas discharge duct at an angle, strike the wall of the duct, and subsequently deflect in the direction of discharge of the combustion gases from the duct 3. Part of the gases is led into the combustion gas discharge duct 3 at an angle of 90° relative to the central axis of the duct; this is indicated by arrows d.

In this way, a combustion gas shield is obtained in the combustion gas discharge duct 3 in the prolongation of the guide baffle 12, viewed in the direction of flow of the gases from the opening 11 in the duct, which shield extends across virtually the entire cross section of the duct. This gas shield prevents the combustion gases that do not flow via the heat exchanger from passing through the discharge duct. Thus it is achieved that virtually all the combustion gas is led through the heat exchanger.

In the event of fan failure, the combustion gases will be discharged via the combustion gas discharge duct 3, as indicated by arrows c, as the free opening in the duct at the place of the heat exchanger is sufficiently large. In the event of inadequate functioning of the fan, the combustion gases will be discharged, in part according to arrows b and in part according to arrows c.

The angle of baffle 12 to the central axis of the duct 3 is between 40° and 70°, preferably between 50° and 60°. Baffle 12 extends partly into the combustion gas discharge duct. The horizontal projection of this baffle 12 is equal to 0.25 to 0.50 times the inner diameter of the combustion gas discharge duct 3. The dimensions of the opening 11 and the fan are such that the combustion gases from the heat exchanger flow into the combustion gas discharge duct with a velocity of between 8 and 12 m/s.

The condensate formed in the heat exchanger 1 is continuously discharged via opening 13, and that formed in the combustion gas discharge duct 3 via opening 14. Both discharges, 13 and 14, may connect to a joint discharge line via a water lock.

In the above-described version, the fan is located after the heat exchanger, viewed in the direction of flow of the combustion gases. It is also possible to place the fan before the heat exchanger with application of the present invention.

## Claims

1. Assembly comprising a heat recovery device which is incorporated in the combustion gas discharge duct of a gas- or oilfired heating apparatus with a liquid or air circuit, said heat recovery device substantially comprising supply and discharge connections for the combustion gases to be passed through a heat exchanger for exchanging heat between the combustion gases and the liquid or air in said liquid or air circuit and a fan for forcing the combustion gases past the heat exchanger, the supply and discharge connections for the combustion gases and the fan being so arranged and designed that if the fan is not operating, or operating inadequately, the combustion gases are led — at least in part — directly to the combustion gas discharge duct, characterized in that an inclined guide baffle is fixed at the exit end of the discharge connection, which baffle extends from said exit end into the combustion gas discharge duct at an angle between 40° and 70° relative to the central axis of the combustion gas discharge duct, the dimension of said baffle measured in the direction parallel to the central axis of the combustion gas discharge duct being smaller than the corresponding dimension of the exit end of the discharge connection.

2. Assembly according to claim 1, characterized in that the angle relative to the central axis of the combustion gas discharge duct at which the guide baffle extends into the combustion gas discharge duct is between 50° and 60°.

3. Assembly according to claim 1 or 2, characterized in that the guide baffle extends into the combustion gas discharge duct over a distance equal to 0.25—0.50 times the inner diameter thereof, measured normal to the central axis of the combustion gas discharge duct.

4. Assembly according to any one of the claims 1—3, characterized in that the portion of the heat exchanger comprising the supply connection extends into the combustion gas discharge duct.

5. Assembly according to claim 4, characterized in that the portion of the heat exchanger comprising the supply connection extends into the combustion gas discharge duct over a distance of at most half the diameter of said duct.

## Patentansprüche

1. Anordnung mit Wärmerückgewinnungsvorrichtung, die im Rauchgasabführkanal einer gas- oder ölgefeuerten Heizanlage mit einem Flüssigkeits- oder Luftkreislauf eingebaut ist und im wesentlichen Zu- und Abführverbindungen für die durch einen Wärmetauscher zum Wärmeaustausch zwischen den Rauchgasen und der Flüssigkeit oder der Luft in dem genannten Flüssigkeits- oder Luftkreislauf zu führenden Rauchgase und einen die Rauchgase am Wärmetauscher vorbeitreibenden Ventilator umfaßt, wobei die Zu- und Abführverbindungen für die Rauchgase und der Ventilator so angeordnet und ausgestaltet sind, daß die Rauchgase — zumindest teilweise — direkt zu dem Rauchgasabführkanal geleitet werden, wenn der Ventilator nicht oder nur unzureichend arbeitet, dadurch gekennzeichnet, daß ein geneigtes Leitblech am Austrittsende der Abführverbindung befestigt ist, wobei sich das Blech vom genannten Austrittsende in den Rauchgasabführkanal in einem Winkel zwischen 40° und 70° relativ zur Mittelachse des Rauchgasabführkanals erstreckt und die Abmessung des genannten Blechs — gemessen in der Richtung parallel zur Mittelachse des Rauchgasabführkanals — kleiner ist als die entsprechende Abmessung des Austrittsendes der Abführverbindung.

2. Anordnung nach Anspruch 1, dadurch gekennzeichnet, daß der Winkel, in dem sich das Leitblech in den Rauchgasabführkanal erstreckt, relativ zur Mittelachse des Rauchgasabführkanals zwischen 50° und 60° beträgt.

3. Anordnung nach Anspruch 1 oder 2, dadurch gekennzeichnet, daß das Leitblech sich in den Rauchgasabführkanal über einen Abstand erstreckt, der dem 0,25 bis 0,50 fachen seines Innendurchmessers, senkrecht zur Mittelachse des Rauchgasabführkanals gemessen, entspricht.

4. Anordnung nach einem der Ansprüche 1 bis 3, dadurch gekennzeichnet, daß der Teil des Wärmetauschers, der die Zuführverbindung umfaßt, sich in den Rauchgasabführkanal erstreckt.

5. Anordnung nach Anspruch 4, dadurch gekennzeichnet, daß der Teil des Wärmetauschers, der die Zuführverbindung umfaßt, sich in den Rauchgasabführkanal über einen Abstand von höchstens der Hälfte des Durchmessers des genannten Kanals erstreckt.

## Revendications

1. Assemblage comprenant un dispositif pour récupération de chaleur qui est incorporé dans le conduit de décharge des gaz de combustion d'un appareil de chauffage au gaz ou au mazout comportant un circuit de liquide ou d'air, ledit dispositif pour récupération de chaleur comprenant dans l'essentiel des raccords d'alimentation et de décharge des gaz de combustion à faire passer dans un échangeur de chaleur pour échanger de la chaleur entre les gaz de combustion et le liquide ou l'air se trouvant dans ledit circuit de liquide ou d'air et en ventilateur pour forcer les gaz de combustion à travers l'échangeur de chaleur, les raccords d'alimentation et de décharge des gaz de combustion et le ventilateur étant agencés et conçus de telle sorte que, si le ventilateur ne fonctionne pas, ou fonctionne incorrectement, les gaz de combustion soient canalisés — au moins en partie — directement vers le conduit de décharge des gaz de combustion, caractérisé en ce qu'une chicane inclinée de guidage est fixée à l'extrémité de sortie du raccord de décharge, ladite chicane s'étend depuis l'extrémité de sortie jusque dans le conduit de décharge des gaz de combustion en faisant un angle compris entre 40° et 70° avec l'axe central du conduit de décharge des gaz de combustion, la dimension de ladite chicane, mesurée dans la direction parallèle à l'axe central du conduit de décharge des gaz de combustion étant plus petite que la dimension correspondante de l'extrémité de sortie du raccord de décharge.

2. Assemblage selon la revendication 1, caractérisé en ce que l'angle par rapport à l'axe central du conduit de décharge des gaz de combustion, suivant lequel la chicane de guidage s'étend dans le conduit de décharge des gaz de combustion est compris entre 50° et 60°.

3. Assemblage selon la revendication 1 ou 2, caractérisé en ce que la chicane de guidage s'étend dans le conduit de décharge des gaz de combustion sur une distance égale à 0,25 à 0,50 fois le diamètre intérieur de celui-ci, en étant mesurée perpendiculairement à l'axe central du conduit de décharge des gaz de combustion.

4. Assemblage selon une quelconque des revendications 1 à 3, caractérisé en ce que la partie de l'échangeur de chaleur comprenant le raccord d'alimentation s'étend dans le conduit de décharge des gaz de combustion.

5. Assemblage selon la revendication 4, caractérisé en ce que la partie de l'échangeur de chaleur comprenant le raccord d'alimentation s'étend dans le conduit de décharge des gaz de combustion sur une distance au plus égale à la moitié du diamètre dudit conduit.

Fig. 1

Fig. 2